# EUROPEAN PATENT APPLICATION

(11) **EP 4 116 668 A1**
(43) Date of publication of application: **11.01.2023**
(21) Application number: 21183894.1
(22) Date of filing: 06.07.2021
(51) Int. Cl.: G01B 11/06

(54) **METHOD AND APPARATUS FOR MEASURING THE THICKNESS OF A LAYER ON THE SUB-NANOMETER SCALE**

(71) Applicant: LayTec AG, 10709 Berlin (DE)
(72) Inventor: ZETTLER, Jörg-Thomas, 12587 Berlin (DE); CORNWELL, William David, Chester CH2 3QR (GB)
(74) Representative: Gulde & Partner

(57) **Abstract**

The present invention relates to a method and an apparatus for measuring the thickness of a critical layer in a semiconductor power-electronics device during the manufacturing process.

It is an object of the present invention to provide a method and an apparatus for blind endpoint detection during the plasma-etching process which can advantageously be applied to semiconductor wafers, in particular to p-GaN gate etching on GaN/AIGaN/GaN HEMT wafers and to recess etching on AIGaN/GaN HEMT wafers

According to the invention, the method for determining a thickness of a sample comprises: providing the sample inside a processing chamber, wherein the sample comprises a semiconducting wafer; irradiating optical radiation onto the sample, the optical radiation comprising light of a first wavelength and light of a second wavelength; the first wavelength being different from the second wavelength; measuring a first reflection signal from the sample with respect to the first wavelength; measuring a second reflection signal from the sample with respect to second wavelength; calculating a thickness of the sample based on the first reflection signal and the second reflection signal; wherein each of the first wavelength and the second wavelength is selected from a range of 300nm to 370nm.

## Description

### BACKGROUND OF THE INVENTION

### 1. Field of the Invention

The present invention relates to a method and an apparatus for measuring the thickness of a critical layer in a semiconductor power-electronics device during the manufacturing process. Metrology systems based on this invention will be capable of determining the film thickness in real-time during the process with an accuracy on the subnanometer scale. Therefore, these metrology systems will be specifically suited for end-point detection in plasma-etching processes and plasma-deposition processes.

### 2. Description of Related Art

The manufacturing process of semiconductor devices typically consists of a chain of deposition and etching processes on a semiconductor wafer, starting from a bare semiconductor substrate, adding step by step a certain stack of layers and finalising the device structure by a complex sequence of multiple masking and etching procedures. For power-electronics applications with typical vertical film thicknesses in the nanometer range and typical lateral device-structure dimensions in the micron-range, the manufacturing process is usually controlled by a manifold of non-contact metrology steps for quality tests and yield control which are integrated into the process flow.

These metrology steps involve both ex-situ metrology (scanning the wafer between certain manufacturing steps) and in-situ metrology (used for process control during certain manufacturing steps). For in-situ reflectance measurements during etching steps certain small (e.g. 200µm x 200µm) test-pads must be integrated into the mask design.

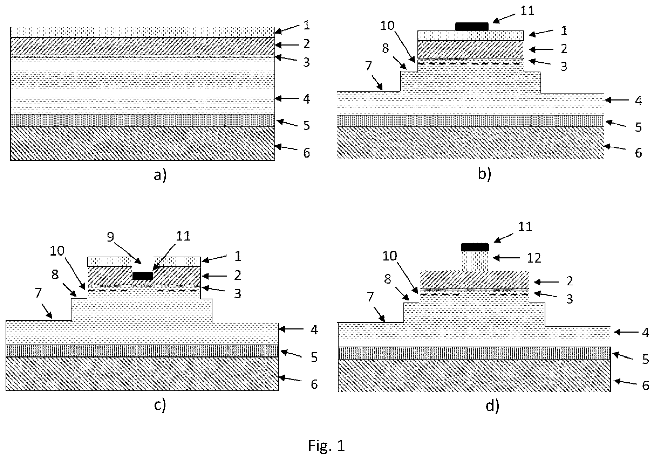

Fig. 1a shows the epitaxial layer structure of a pHEMT device (high-electron-mobility transistor also referred to as HEMT) with the full layer stack on the silicon substrate 6. Fig. 1b shows the layer structure after some further processing of a pHEMT device with a non-recessed structure. Further, Fig. 1c shows a different layer structure of a pHEMT device after etching towards the recessed device structure where reference numeral 1 represents a GaN cap layer; reference numeral 2 represents a AIGaN barrier layer; reference numeral 3 represents a thin interface layer (e.g. 1nm AIN); reference numeral 4 represents a GaN buffer layer with integrated AIGaN layers for strain management; reference numeral 5 represents a nucleation layers (AIN, AlGaN); reference numeral 7 represents a trench etch; reference numeral 8 represents a drain and source contact etch; reference numeral 9 represents a recess etch and reference numeral 10 represents a 2-dimensional electron gas. In device structures like in Fig.1c the 2DEG is switched off locally by recess etched gate which is known from J.P. Ibbetson et al.: "Polarization effects, surface states, and the source of electrons in AlGaN/GaN heterostructure field effect transistors"; Appl. Phys. Lett., Vol. 77, No. 2, 10 July 2000.

Fig. 1d shows an alternative normally-OFF pHEMT structure where a p-doped GaN cap layer 12 is used for locally interrupting the 2DEG 10. In these so called p-GaN gate structures the 2DEG is switched off locally by Fermi-level engineering due to high p-doping in the p-GaN gate which is known from F. Roccaforte et al.: "Review: An Overview of Normally-Off GaN-Based High Electron Mobility Transistors"; Materials 2019, 12, 1599.

In more particular, Fig.1 gives two example structures of normally-OFF GaN/AlGaN pHEMT (pseudomorphic High Electron-Mobility Transistor) devices on silicon substrate. A pHEMT layer stack (Fig.1a) based on the GaN/AlGaN material system usually is grown in MOCVD (metal-organic chemical vapor deposition) on large silicon wafers or silicon carbide wafers. The thick GaN-buffer layer 4 usually contains several sophisticated AIGaN/AIN strain relaxation sub-layers, because of the different lattice constants of substrates (Si or SiC) and gallium nitride. A pHEMT is a high-performance device for power-electronics and finds its applications in electric vehicles, photo-voltaic converters, base stations for mobile phone networks and other high-tech applications. Its name "high electron-mobility" is derived from its key electronic component, the two-dimensional electron gas (2-DEG; 10), that enables very high currents at minimum resistive losses due to the high electron mobility of GaN in conjunction with extremely high electron densities in an undoped GaN inversion layer at the GaN/AlGaN interface. These currents can be switched ON/OFF at high frequencies by placing a gate electrode 11 on the top/center of the device structure (see Fig. 1b, representing a "Schottky-Gate"). However, even without applying a voltage to a Schottky gate this simplest type of structure is in the ON state (conducting between source (S) and drain (D) contact). This is a significant disadvantage, because for normal operation (zero gate voltage gives zero S-D current) always a second transistor (e.g. a silicon MOSFET) is needed as it also has been reviewed in F. Roccaforte et al. Therefore, in more advanced device structures, using a recessed gate (Fig.1c, physics mechanism has been explained in J. P. Ibbetson et al.) or a p-GaN gate (Fig.1d, physics mechanism has been explained in Roccaforte et al.), at zero gate voltage the 2DEG is disappearing below the gate. These devices are the preferred normally-OFF devices. Except below the gate electrode, at zero gate voltage the 2DEG still exists in the rest of the current path between S and D. Hence, by applying a voltage to the gate electrode large current densities can be switched ON/OFF very fast.

In a recess gate structure (Fig. 1c) the recess 9 is to be etched down to a precisely defined remaining thickness of AIGaN. By placing the gate electrode into this recess, the switching performance of the device is transformed, as intended, from "normally ON" to the preferred "normally OFF" mode. This solution is rather simple and robust because the charge density in the 2DEG 10 depends directly on thickness of the AIGaN barrier layer 2, as has been shown by P. Ibbetson et al.. Hence, a reduced thickness in the recess 9 creates a gap in the 2DEG if there is no voltage applied to the gate electrode. While the physics is rather simple, the related technology challenge is huge: the remaining thickness of AIGaN 2 in the recess 9 has to be controlled on an accuracy level of atomic mono-layers (F. Roccaforte et al.) - hence for etching the recess a non-roughening etching method has to be combined with extremely high accuracy in-situ thickness control.

Similarly, tight etching process control is also needed for p-GaN gate structures. For optimum performance of a HEMT device with p-GaN gate, all design parameters (AIGaN thickness and composition as well as p-GaN thickness and doping level) must be kept within tight specifications. Especially the accurate p-GaN thickness is achieved by accurate end-point detection when etching an initially thicker p-GaN layer down to the specified thickness of e.g. 10nm.

Therefore, the present invention relates to the in-situ measurement during plasma etching of these critical layers (AIGaN recess and p-GaN gate) in advanced HEMT structures. More specifically, end-point signals have to be delivered to the plasma-etching tool during the etching process with an accuracy of better ±0.5nm and a precision of better ±0.2nm. For example, the remaining AIGaN layer thickness during recess etch has a typical target thickness of 5nm. This corresponds to only about 10 atomic monolayers of AIGaN. The present invention also can be applied, with very minor adoptions, to respective plasma deposition processes of nanometer-scaled thin films.

Optical methods are the only choice for endpoint detection in plasma processes because differently to X-ray and electron-beam based techniques they allow for a non-contact remote application without conflicting with the plasma etching process. However, even for optical measurements the task of an in-situ measurement at this extremely high level of accuracy is nearly impossible to accomplish because of several reasons: First, the typical wavelength of light are hundreds of nanometers. Therefore, measuring a 5nm layer thickness with ±0.2nm resolution is a challenge. Second, below ∼10nm the optical properties (n and k) of materials change with thickness due to quantum size effects. Even worse, the 2DEG in the GaN inversion layer causes a local widening of the optical band-gap and therefore also changes the GaN buffer layer's optical properties close to the AlGaN/GaN interface. In consequence, standard thin-film analysis techniques cannot be applied. Third, under conditions of reactive plasma etching chemical reactions are going on at the surface of the thinning AIGaN layer. Assigning tentatively an effective thickness of 1-2nm to this real "reaction-surface" means for a remaining AIGaN barrier layer thickness of only 5nm that 20-40% of the optical in-situ signal are originating from the "reaction-surface". Hence, these surface related signal contributions have to be separated from the thin-film thickness measurement. Finally, all optical properties change with temperature. While the back-side of a wafer in a plasma etching chamber is under tight temperature control (advanced plasma etching tools use Helium cooling from the back-side), the absolute temperature at the etching surface depends on the plasma power applied and on the thermal conductivity of all layers between this surface and the cooled wafer backside. This surface temperature at the etching surface is very reproducible from run to run - but typically its true value is not exactly known. It is expected to range between RT and ∼100°C.

Conventional optical method for providing end-point signals during plasma etching fail for this specific pHEMT application: Optical Emission Spectroscopy (OES) can detect an interface by sensing changes in the plasma due to the appearance of new types of atoms/ions/molecules (originating from the layer below the interface) in the plasma emission spectra. However, OES cannot measure a thickness and therefore it cannot provide end-point signals to the etching tool at a certain film thickness. OES is "blind" (signals do not really change) until the etching front is arriving at the next interface. Therefore, the task of providing an end-point signal to the etching tool at a precise layer thickness is also called "blind endpoint detection". Latest spectral reflectance systems such as those described in T. Sugahara et al.: "High Performance In-situ Monitoring System for ICP Dry Etching"; Proceedings of CS MANTECH Conference, May 2020, recently developed for blind end-point detection, suffer from a poor signal-to-noise ratio and non-existing analysis algorithms for deriving the real AIGaN and p-GaN thicknesses under the challenging conditions for quantitative in-situ thickness measurements described above. Ellipsometry, known for its capability of measuring very thin films, is not applicable here due to the etching chamber geometry and the need for measuring on only a tiny test-pad on the photolithography masked surface of the device stack. In summary: all existing technologies are not sufficiently precise to meet the target precision of ±0.2nm for controlling the recess etch process and/or the p-GaN gate etch process.

It is therefore an object of the present invention to provide a method and an apparatus for blind end-point detection during the plasma-etching process which can advantageously be applied to semiconductor wafers, in particular to p-GaN gate etching on GaN/AlGaN/GaN HEMT wafers and to recess etching on AlGaN/GaN HEMT wafers.

### SUMMARY OF THE INVENTION

Aspects of the present invention disclose a method to determine a thickness of a sample comprising: providing the sample inside a processing chamber, wherein the sample comprises a semiconducting wafer; irradiating optical radiation onto the sample, the optical radiation comprising light of a first wavelength and light of a second wavelength; the first wavelength being different from the second wavelength; measuring a first reflection signal from the sample with respect to the first wavelength; measuring a second reflection signal from the sample with respect to the second wavelength; calculating a thickness of the sample based on the first reflection signal and the second reflection signal; wherein each of the first wavelength and the second wavelength is selected from a range of 300nm to 370nm.

According an embodiment, the sample is etched using a plasma etching process. The sample may be etched using plasma-assisted atomic layer etching.

According to an embodiment of the invention, a method is provided where the light for local reflectance monitoring is focussed to a (preferably 500µm or smaller) spot diameter inside a test pad on the sample, more preferred to a 300µm spot diameter and still more preferred to a 100µm spot diameter. The related x-y-scanning stage for the optical head has a positioning accuracy of ±1 µm or better and is combined with a tilting unit that enables precise normal incidence adjustments with 0.05° accuracy or even better.

According to an embodiment of the invention, the optical head of the reflectance unit and/or the position of the focussed light spot on the sample can be x-y-scanned in a (preferably 1000µm x 1000µm or greater) area segment on the surface of the sample for automatically localizing the test pad position based on the measured reflectance signals. More preferred the scanning range is 2000µm x 2000µm and even more preferred the scanning range is 5000µm x 5000µm.

According to an embodiment of the invention, the light source is modulated for plasma light's background suppression with 100Hz or greater, more preferred with 250Hz or greater and even more preferred with 500Hz or greater.

According to an embodiment of the invention, during the off phases of the light source modulation the amount of plasma radiation out of the plasma chamber is measured at the two wavelengths for additional monitoring of the plasma process (etching or deposition).

According to an embodiment of the invention, the data acquisition rate of the detector is 0.5kHz or greater, more preferred is 2kHz or greater and still more preferred is 10kHz or greater.

According to an embodiment, the sample is etched while steps of irradiating optical radiation onto the sample, measuring a first reflection signal and a second reflection signal and calculating a thickness of the sample, are repeatedly carried out during the etching process.

According to another embodiment, a film is deposited on the sample while steps of irradiating optical radiation onto the sample, measuring a first reflection signal and a second reflection signal and calculating a thickness of the sample, are repeatedly carried out during the deposition process.

The first wavelength may be selected from a range of 335nm to 345nm and the second wavelength may be selected from a range of 360nm to 370nm.

According to an embodiment of the invention, at the target thickness of the etched or deposited film at least one of the two wavelength has a sensitivity to layer thickness changes of ΔR/Δd (AlGaN) = 0.0001/nm⁻¹ or greater, more preferred of ΔR/Δd (AlGaN) = 0.0002/nm⁻¹ or greater and even more preferred of ΔR/Δd (AlGaN) = 0.0004/nm⁻¹ or greater.

According to an embodiment of the invention, a look-up table is used for calculating a thickness of the sample, the look-up table including correlation data of the thickness of the sample and respective measured reflectance signals at the first and second wavelength and therefore removes measurement artefacts from nk quantization effects, structural band-gap variations, surface reaction layers and other signal contributions from parameters others than film thickness.

According to an embodiment of the invention, the sample is a AIGaN barrier layer on top of a recess HEMT structure consisting of a substrate (silicon, SiC, sapphire or GaN), a GaN buffer layer with strain-managing sub-layers, an active GaN layer and optional interface layers (e.g. AIN)

According to an embodiment of the invention, the sample is a p-doped GaN layer on top of a p-GaN HEMT structure consisting of a substrate (silicon, SiC, sapphire or GaN), a GaN buffer layer with strain-managing sub-layers, an active GaN layer, an optional interface layers (e.g. AIN) and a AIGaN barrier layer.

According to an embodiment of the invention, for the absolute reflectance calibration and for cross-calibration to ex-situ AIGaN thickness measurements, the sample is a stacked structure of a first semiconductor layer (such as GaN) and AIGaN as a second semiconductor layer, wherein the semiconductor material of the first semiconductor layer is different from the material semiconductor material of the second semiconductor layer, and wherein the second semiconductor layer is disposed on top of the first semiconductor layer, wherein the second semiconductor layer is completely etched through so to expose the first semiconductor layer and wherein the time-linearly changing absolute thickness of the second semiconductor layer is correlated to the measured reflectance by utilizing the formerly ex-situ measured total thickness of the second semiconductor layer. The absolute scale of reflectance is automatically calibrated to the known reflectance level of the GaN in the first semiconductor layer because this thick GaN buffer layer is fully absorbing at the first and second wavelength. This procedure is used for generating the data for the recess type look-up table.

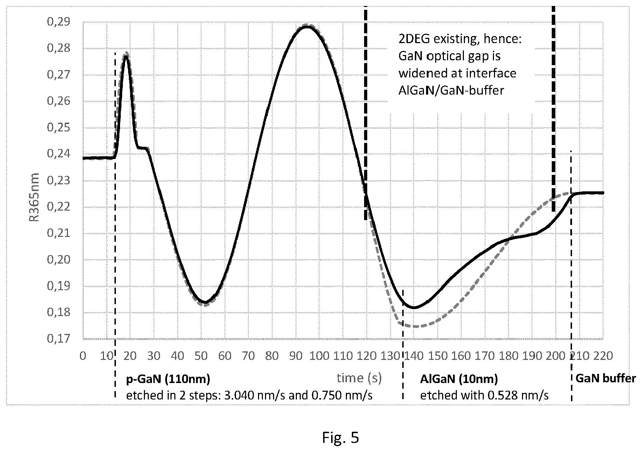

According to an embodiment of the invention, for the absolute reflectance calibration and for cross-calibration to ex-situ p-GaN thickness measurements, the sample is a stacked structure of GaN as a first semiconductor layer, of AIGaN as a second semiconductor layer and of p-GaN as a third semiconductor layer, wherein the semiconductor material of the first semiconductor layer is different from the semiconductor material of the second and third semiconductor layer, wherein the second and third semiconductor layer is completely etched through so to expose the first semiconductor layer. During this etching-through reference process of a calibration sample the etch rates are assumed to be constant in time for the second and third semiconductor layer (AIGaN and p-GaN, respectively). The p-GaN etching rate is determined by conventional FPO thin-film fitting during the initial, not yet 2DEG influenced etching sequence (see Fig.5, t<120s). For the calibration sample the thickness of p-GaN has been measured before ex-situ (e.g. by XRD). Hence, the time t₁ of etching through to the p-Gan/AIGaN interface can be calculated (t₁=135s in Fig.5). The etching-through state to the AlGaN/GaN-buffer-interface is detected from the final flattening of the reflectance trace (see Fig.5, t₂=208s). For the calibration sample the thicknesses d_{AlGaN} of AIGaN has been also measured before ex-situ (e.g. by XRD). Hence, the AIGaN etch rate is determined from d_{AlGaN}/(t₂-t₁). In consequence, the changing absolute thicknesses of the first and second semiconductor layer during this etching-through calibration run are precisely known and can be correlated to the measured reflectance, thereby generating the related look-up table for this process.

In subsequent device manufacturing processes, where the layers are not etched through, these pre-calibrated look-up tables are used for calculating a thickness of the sample in realtime, because this look-up table includes the correlation data between the thickness of the currently etched semiconductor layer and the respective measured reflectance signals at the first and second wavelength. The look-up table empirically includes all contributions to the measured reflectance, specifically but not exclusively the contribution of Fabry-Perot-Oscillations of changing film thickness, the contribution of changing GaN optical gaps due to 2DEG formation/disappearance, the contribution of quantization effects to the refractive index of very thin films and the contribution of the surface reaction layer. Therefore, this look-up-table is the key element for real-time correlation of the measured reflectance to the real thickness of the target layer.

Applications of the in-situ thickness measurement method disclosed here could be processes for etching or depositing films on semiconductor substrates. By repeatedly calculating a thickness of the sample using the above-described method for determining a thickness of a sample; the etching or deposition process can be controlled on the level of atomic monolayers based on at least one of the calculated film thicknesses of the sample.

Some of these processes for etching or deposition of films on semiconductor substrates are performed in a cyclic (crystal atomic layer by crystal atomic layer) mode in order to keep the film surface atomically smooth. Typical process cycle times range between 5s and 30s. For such cyclic etching or deposition processes it is preferred, that the look-up tables are generated by exactly averaging the measured reflectance data with an averaging time that is identical to the ALET cycle time. Otherwise the cyclic modulation of the physical properties (surface reaction layer, surface temperature, GaN band-gap position, ...) would add significant noise to the analysis that would prohibit the sub-nm resolution of the method.

Aspects of the present invention disclose an apparatus for determining in realtime a film-thickness of a sample which comprises a semiconducting wafer. The apparatus is comprising: a processing chamber adapted to accommodate the sample; a light source unit (adapted for irradiating optical radiation onto the sample, the optical radiation comprising light of a first wavelength and light of a second wavelength; wherein the first wavelength is different from the second wavelength; a detection unit adapted for measuring a first reflection signal from the sample with respect to the first wavelength and adapted for measuring a second reflection signal from the sample with respect to second wavelength; an electronic control unit adapted for calculating a thickness of the sample based on the first reflection signal and the second reflection signal.

As light sources, UV LEDs are applied according to preferred embodiments because of their low-noise performance and of their capability of electric modulation.

As detectors, silicon diodes are applied according to preferred embodiments because of their high sensitivity in the UV range in combination with low-noise performance and short timeconstants for high data acquisition rates.

Aspects of the present invention disclose a HEMT manufactured by using the methods according to the present invention. According to an embodiment of the invention, the semiconducting devices disclosed in Figure 1 are manufactured by using the methods according to the present invention.

### BRIEF DESCRIPTION OF THE DRAWINGS

The accompanying drawings, together with the specification, illustrate exemplary embodiments of the present invention, and, together with the description, serve to explain the principles of the present invention. The figures show:
- FIG. 1: HEMT structures manufactured with high accuracy with the method according to embodiments of the present invention;
- FIG. 2: An apparatus according to an embodiment of the present invention;
- FIG. 3: Simulated reflectance spectra of a simplified AlGaN/GaN-Buffer/Si structure that is used to manufacture HEMT structures in accordance with embodiments of the present invention;
- FIG. 4a-c: Simulated reflectance properties of an AIGaN/GaN-structure during AIGaN recess etching for selection of the optimum wavelength for AIGaN thickness end-pointing;
- FIG. 5: Reflectance properties (as measured and fitted/simulated) of a p-GaN/AIGaN/GaN-buffer structure during etching-through to the GaN buffer. A reflectance wavelength of 365nm was chosen for being sensitive to etchinginduced changes of the GaN-buffer's bandgap at the AIGaN/GaN-buffer interface;
- FIG. 6a-b: Plasma assisted Atomic Layer Etching (ALET) of semiconductors;
- FIG. 7a-b: In-situ reflectance as measured during ALET of an AIGaN recess layer;
- FIG. 8a-b: The sensitivity of reflectance properties at a radiation wavelength of 340nm to an ALET surface layer;
- FIG. 9: End-point detection method during AIGaN etching according to embodiments of the present invention;
- FIG. 10: Separated ALET modulation of reflectance traces during AIGaN etching: the reflectance at both wavelength (340nm and 365nm) is displayed as measured and after applying a smoothing digital filter (ALET averaged) that removes the reflectance modulation during the 12s ALET cycles. In addition, the reflectance difference signal is shown as the difference between as measured reflectances and the corresponding ALET averaged reflectances; and
- FIG. 11: Endpoint detection during p-GaN etching according to embodiments of the present invention.

### DETAILED DESCRIPTION OF THE DRAWINGS

In the following detailed description, only certain exemplary embodiments of the present invention are shown and described, by way of illustration. As those skilled in the art would recognize, the invention may be embodied in many different forms and should not be construed as being limited to the embodiments set forth herein.

Fig.1a shows a HEMT layer stack as it is typically grown by MOCVD. Fig.1b to Fig.1d give sketches of the related device structures after further etching and deposition steps in the manufacturing process: Schottky Gate structure (Fig.1b); Recess Gate structure (Fig.1c) and p-GaN gate structure (Fig.1d).

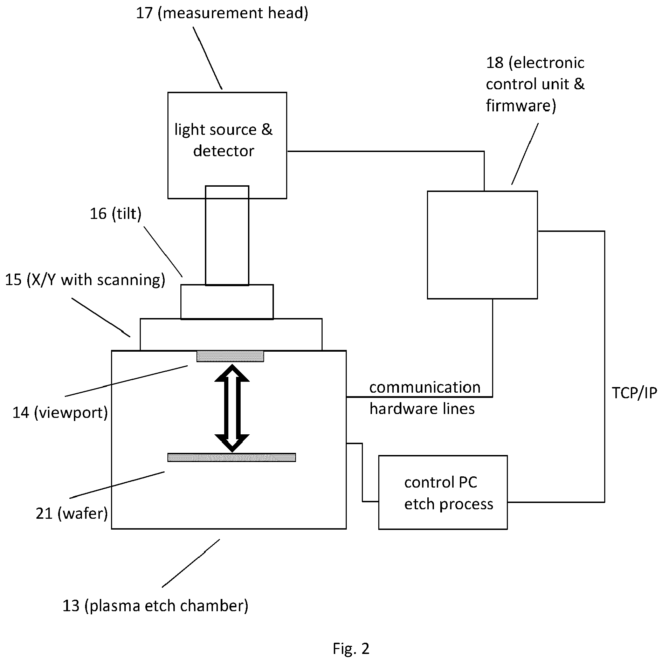

Fig. 2 shows a schematically sectional view of an apparatus according to an embodiment of the present invention.

The apparatus performs optical reflection measurements at a wafer 21 (sample 2) under etching process in a plasma etch chamber 13. The light passes through an optical viewport 14. The measurement head 17 (comprising light source and detector and means for communication with the electronic control unit 18) is mounted on a combined tilting stage 16 and x/y scanning stage 15 adapted for precise optical adjustment to small test pads defined in the mask covering the wafer 21.

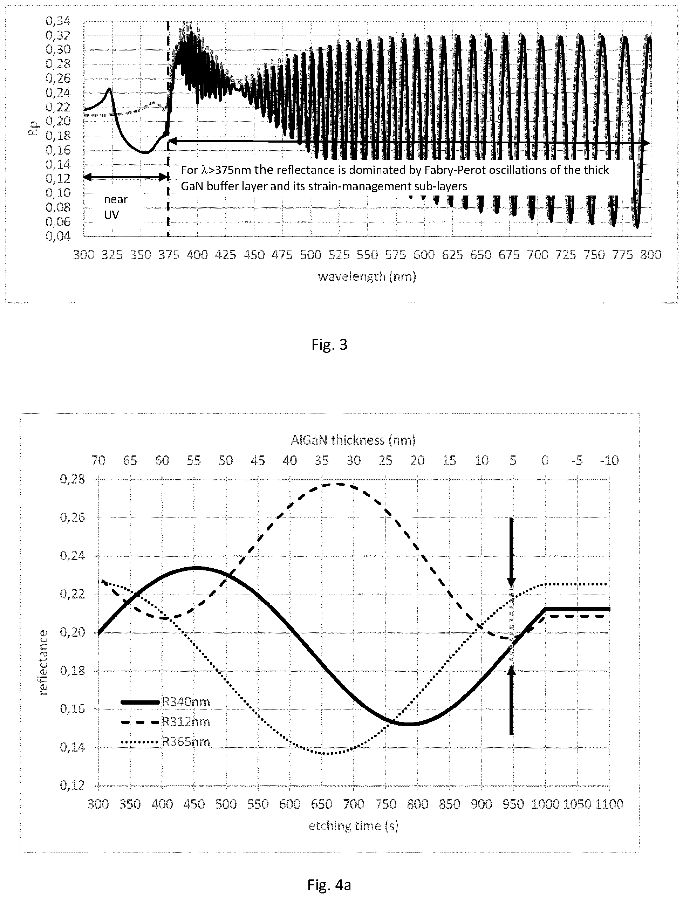

The apparatus combines two new approaches: UV LEDs of suitably selected emission wavelength are used as light source. The near UV spectral range (300nm - 370nm) is the only spectral range where, due to the GaN's light absorption, the complex GaN buffer structure, usually containing several sub-layers for strain engineering, is not modifying the reflectance signal (see Fig. 3).

Therefore, in the apparatus the light of UV LED light sources is directed to the test-pad on the HEMT wafer 21 in the plasma etching chamber 13. Preferably, no optical fibers are used. This direct focussing of LED light to the test pad is maximizing the photon intensity and enables low noise in-situ reflectance measurements. Light output is electronically modulated for state-of-the-art suppression of background radiation (plasma process light).

Fig. 3 shows simulated reflectance spectra of a simplified AlGaN/GaN-Buffer/Si structure. The UV spectral range just below the GaN band-edge wavelength (∼375nm) is preferred: below ∼370nm the reflectance signature is depending only on the thickness of the AIGaN layer. The solid line is for 20nm of AIGaN and the broken line is for 0nm of AIGaN. For wavelength >370nm every small change in buffer layer or nucleation layer would impact phase and amplitude of the Fabry-Perot oscillations in the reflectance signature and therefore would also jeopardize the AIGaN thickness resolution.

An aspect of the present invention is the careful selection of UV wavelength for enabling in-situ reflectance measurements at a signal/noise (S/N) level corresponding to thickness variations of less than 0.2nm.

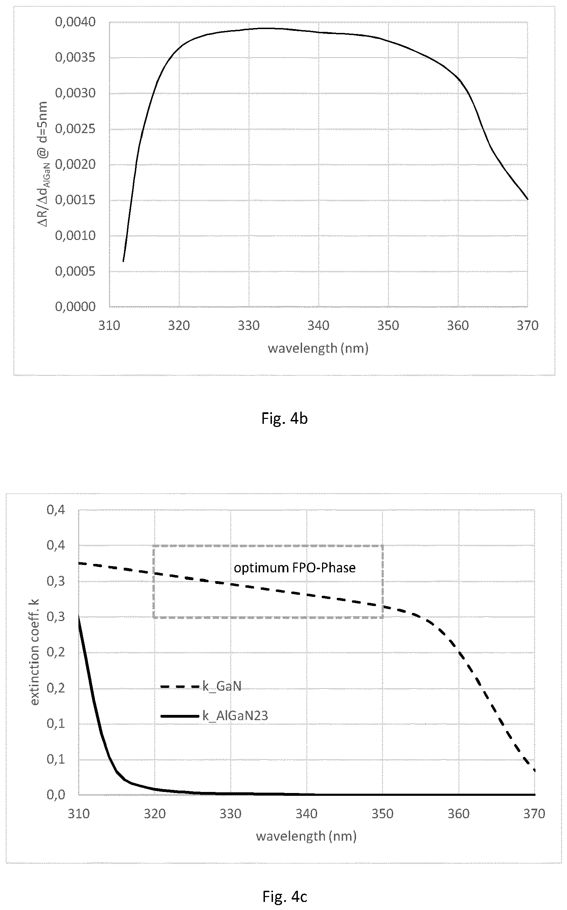

Fig. 4 explains why 340nm represents an optimum UV wavelength (first wavelength) for maximum thickness sensitivity at the 5nm target thickness of AIGaN. Maximum film-thickness sensitivity at a given level of reflectance noise corresponds to maximum slope of the reflectance traces during etching or deposition. Fig. 4 shows the selection of the optimum reflection wavelength within the UV range for maximum thickness sensitivity at the target thickness of 5nm Al_{23%}Ga_{77%}N recess for blind end-point detection according to embodiments of the present invention.

Fig. 4a shows simulated example reflectance traces for 3 wavelengths at T=50°C. The slope at 5nm (marked by arrows) is to be maximized according to preferred embodiments of the present invention. Fig. 4b shows this reflectance slope with AIGaN thickness at 5nm of AIGaN in the full wavelength range and Fig. 4c explains why the ∼90° FPO phase (maximum slope) for 5nm of AIGaN on GaN is achievable at a wavelength of 340nm and why at this wavelength the AIGaN reflection is less sensitive to GaN band-gap changes with temperature/strain/2DEG.

In Fig. 4a the reflectance response during etching of a fictive 70nm thick AIGaN layer on GaN is simulated for three different wavelengths (312nm, 340nm und 365nm) at an estimated wafer temperature of 50°C. An etching-rate of 0.1nm/s is assumed. The corresponding AIGaN thicknesses are depicted at the upper horizontal scale. As can be seen in Fig.4a, reflectance at 340nm gives the maximum slope at 5nm residual thickness of AIGaN. A maximum slope corresponds to a maximum sensitivity for end-point detection at this thickness. This kind of sensitivity analysis can be performed for all UV wavelength (Fig. 4b). The slope of UV reflection traces for very thin AIGaN cap layers depends on the phase-shift of reflected light at the AlGaN/GaN interface. This phase-shift increases with the difference in extinction index k between the two materials (see Fig.4c).

Another advantage of the 340nm wavelength choice can also be concluded from Fig. 4c: the sharp rise in k at about 365nm for GaN and at about 315nm for AIGaN (23%Al) marks the respective band-edge positions. Monitoring etching processes at these wavelengths would complicate thickness end-point detection because of the sensitivity to all other effects influencing the optical gaps (temperature, strain, 2DEG, ...).

On the other hand, adding a second reflectance wavelength at the GaN bandgap (365nm) gives access to all effects during plasma etch processes that could modify the GaN bandgap position (temperature, strain, 2DEG, ...). This can be utilized for comprehensive statistical process control.

Fig. 5 shows an example: during ICP (Inductively Coupled Plasma) etching through a full p-GaN HEMT layer stack the R365nm in-situ reflectance trace can be nicely fitted with standard thin-film models when there is no 2DEG at the AlGaN/GaN-buffer interface. The 2DEG exists when the p-GaN is not sufficiently thick anymore and when the AIGaN barrier layer still has a certain minimum thickness of a few nm. Obviously, during this ICP etching experiment the 2DEG is switched ON and OFF. R365nm (=reflectance at 365 nm), located close to the GaN bandgap, is highly sensitive to this because the bandgap is up-shifting with the generation of a 2DEG (Burstein-Moss-Shift).

As can be seen in Fig. 5 in connection with the ICP etch through a complete p-GaN HEMT stack: the measured R365nm data (solid line) can be nicely fitted with thin-film reflectance simulation (broken line) except for the data between 120s and 200s where the optical properties of GaN buffer close to the GaN/AlGaN interface change due to 2DEG at this interface.

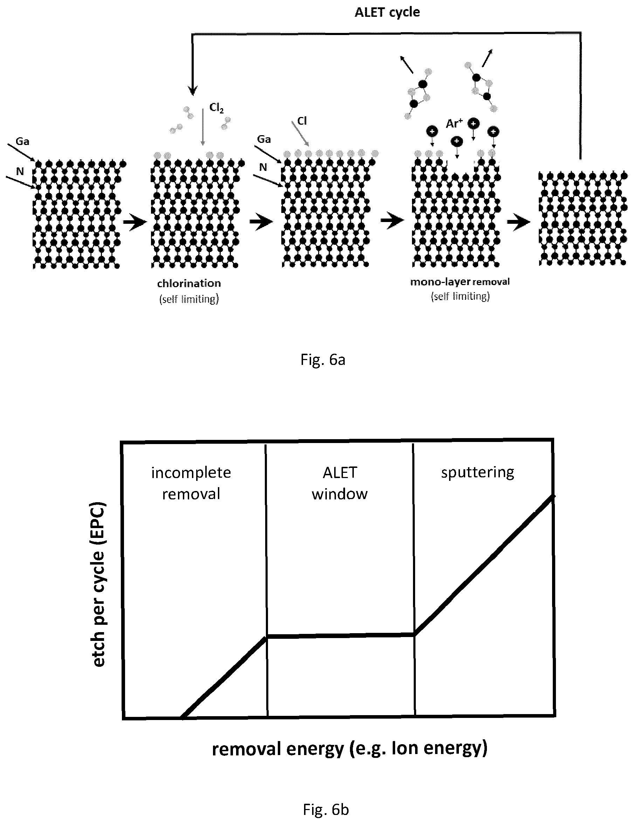

The conclusion from Fig.5 is that real-time thickness measurements during plasma etching of pHEMT structures cannot be based on conventional thin-film optical analysis - because of fundamental changes of the GaN and AIGaN optical properties during the etching process. Therefore, new algorithms are proposed for advanced reflectance data analysis to achieve the ±0.2nm target precision in residual AIGaN or pGaN thickness. These algorithms are integrated into the firmware of the electronic control unit 18. These algorithms have to fulfil three tasks at least: (i) separating the surface contribution to the UV reflectance signal from the AIGaN thin-film contribution, (ii) calculating a thin-film thickness from the extracted thin-film reflectance data despite the changing optical properties (n and k) of the AIGaN layer with film thickness due to quantum effects in the thickness range between ∼10nm and 0nm and (iii) supressing effects of 2DEG generation/disappearance to the GaN band-edge during the etching process. The creation of a look-up table based on etching-through experiments and ex-situ thickness measurements has already been explained above. An aspect of the method according to embodiment of the present invention is that the algorithms applied are carefully adopted to the etching cycles of a specific plasma-based etching process: plasma-assisted atomic layer etching (ALET). ALET is preferred for etching both the recess opening and the final sequence towards p-GaN layer's target thickness in the respective GaN/AlGaN HEMT structuresas ALET is capable of removing GaN and AIGaN monolayer by monolayer. Based on a self-limiting process, ALET creates an atomically smooth surface after each etching cycle. (see Fig. 6).

Fig. 6 illustrates plasma assisted Atomic Layer Etching (ALET) of semiconductors which is e.g. known from K.J. Kanarik et al.: "Review: Overview of atomic layer etching in the semiconductor industry "; J. Vac. Sci. Technol. A 33, 020802 (2015).

The ideal ALET cycle is schematically sketched. This cycle is repeated for etching away monolayer by monolayer for removing a part of a layer. In Fig. 6b it is illustrated what happens when this ideal ALET window (regime II) is missed due to a to small removal energy (regime I) or due to a to high removal energy (regime III).

As can be seen in Fig. 6, a typical ALET cycle lasts a cycle period Δt of several seconds and starts with an atomically smooth surface. In a first step (reaction A) a chemically reactive gas is applied to the surface. The gas atoms or molecules react with the atoms of the top atomic layers. Due to these new surface bonds the back-bonds of the top atomic layer towards the second atomic layer are weakened. In a second step (switch step) eventually existing excess gas molecules are purged away. In a third step a "soft" plasma is applied that supplies reactive ions or atoms with a well-defined removal energy to the surface that is sufficiently high to remove the back-bond-weakened uppermost atomic layer. On the other hand, the removal energy must be too small to remove the semiconductor's atoms in the second crystal layer below. In Fig. 6b) it is sketched what happens when this ideal ALET window (regime II) is missed: In case the removal energy is too high (regime III), atoms of the second atomic layer are sputtered away, the surface roughens and defects are created. In case the removal energy is too small (regime I), the uppermost atomic layer, despite weakening of its back-bonds due to the surface-bonded chemical reactants, is not completely removed. In consequence, the surface roughens and with the next ALET cycle the number of chemical reactants at the surface is accumulated.

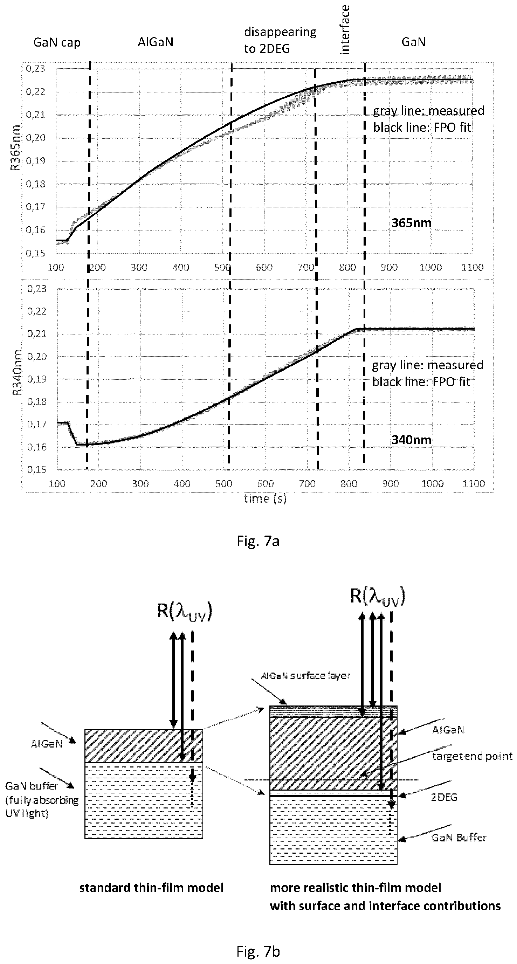

Fig. 7 shows in-situ reflectance as measured during ALET of an AIGaN recess layer: a) the grey lines are data as measured and the black lines are conventional best-fitting thin-film simulations using room-temperature nk from a database of optical properties for GaN and AIGaN. Additional surface and interface effects (sketched in b)) as well as quantum size effects and GaN gap-shifting effects due to 2DEG changes cause in the measured data the characteristically superimposed reflectance oscillations (most pronounced in R365nm) with ALET period time Δt and the additional R365nm signal distortions, respectively.

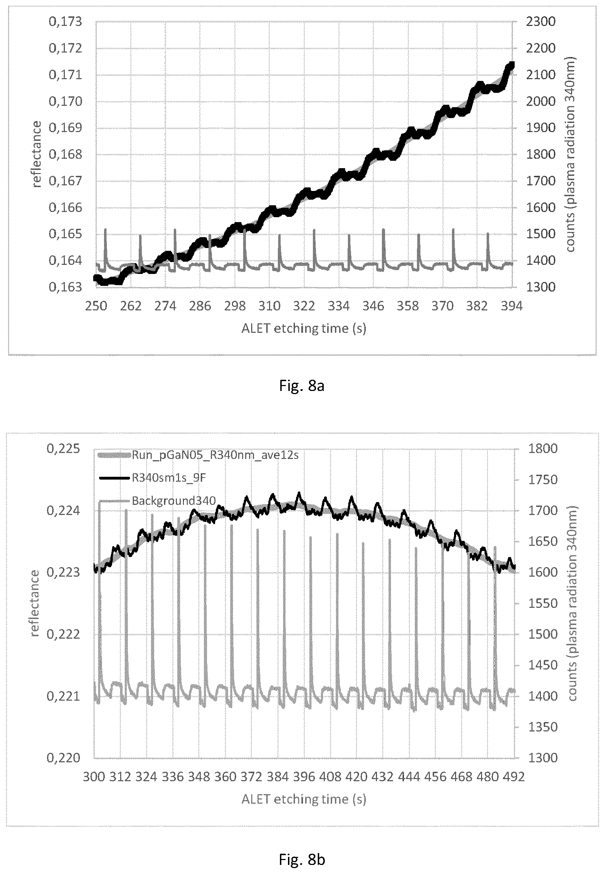

Fig. 8 shows that reflectance at 340nm is sensitive to the ALET surface layer. The first grey lines give the co-measured 340nm plasma emission with the perfect repetition of the 12s ALET cycles. The grey lines are the smoothened R340nm traces with the smoothing window exactly set to the 12s ALET cycle time. The black line gives the measured reflectance data without smoothening but after some automated noise filtering: a) was measured during part of the AIGaN recess etch. The stepwise layer-by-layer removal of AIGaN during a certain subsequence of the ALET cycle is clearly seen. b) gives data as measured during p-GaN ALET. During the maximum of the R340nm Fabry-Perot oscillation (at about 30nm of p-GaN layer remaining) there is no sensitivity to layer removal and only the chemical modulation of the surface layer clearly shows up. According to an embodiment, an empirical AIGaN thin-film thickness contribution to the measured reflectance is isolated by averaging the measured data with a time-window that is exactly the period time of the ALET cycle. This gives for both wavelength a smooth and non-oscillating reflectance trace. This At-averaged smooth reflectance trace is measured in a reference run (like in Fig. 7), assigned afterwards to the respective AIGaN thickness (based on ex-situ reference measurements, e.g. AFM measurements at etching steps) and stored in a look-up table (LUT). This look-up table gives the AIGaN thickness as an empirical function of measured reflectance at 340nm: d(AlGaN)=f(R340nm) and therefore takes care of all the complex physics influencing the reflectance signal beyond just AIGaN film thickness (surface effects, GaN gap shifts, quantum size effects, ...). In subsequent device etching runs this LUT is used to assign the actual AIGaN thickness to the measured R340nm reflectance.

Fig. 8a gives an example of this Δt averaged smoothing of the measured R340nm trace. These 150s of etching correspond to about 6nm of AIGaN etching in 12 ALET cycles with the R340nm reflection changing by 0.01 (1%) from 0.164 to 0.174. Hence, the slope dR/d(Thickness) is 0.0017nm⁻¹. Hence, with a noise <0.0001 in the ALET smoothened reflectance trace the corresponding noise in AIGaN thickness is <0.1nm. The Δt averaged smoothing of the R340nm signal is not just for noise reduction, but for supressing the superimposed reflectance modulations due to surface adsorption layers (see Fig. 8b) or piezoelectric modulations of the GaN bandgap (see Fig. 7a). The data in Fig. 8b have been measured during an FPO maximum of R340nm while etching through the p-GaN layer of a p-GaN structure. In this FPO maximum the reflectance slope is zero. Therefore the film-thickness sensitivity is also zero while the surface and interface contributions of the ALET cycle remain.

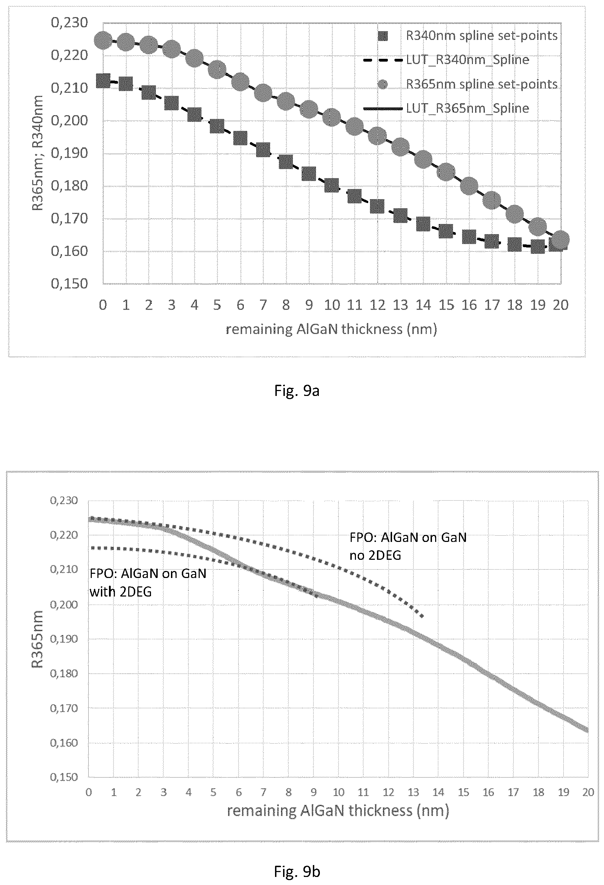

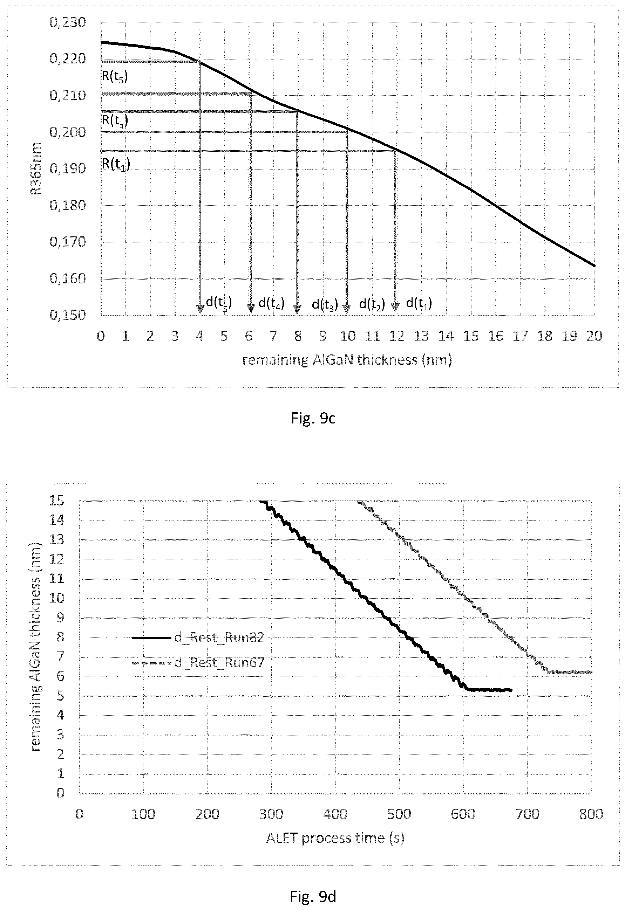

Fig. 9 explains how end-point detection based on a look-up table works. Fig. 9a shows data of the related example look-up table as it has been determined in an etch-through calibration run. Fig. 9b explains that the line-shape of the look-up table cannot be simulated with a simple Fabry-Perot (FP) oscillation, because the GaN bandgap (and hence its n and k) changes during the process due to the disappearing 2DEG (the two related FP-oscillation traces are sketches only). In Fig. 9c it is explained how during the device etching process the AIGaN thickness is derived from the measured reflectance. Fig. 9d shows two real example device etching measurements: the AIGaN thickness is measured by utilizing the R340nm look-up table for real-time transformation of measured 340nm reflectance into AIGaN thicknesses. The "noise" of AIGaN thickness lies in the range of 0.2nm. It results from the superimposed ALET oscillations (stepwise material etching) in the R340nm signal and not from the in-situ metrology tool. These etch runs still have been stopped manually by switching off the ALET process when the thickness output data-line of the in-situ metrology apparatus approached the intended target thickness of the AIGaN recess (manual end-point detection). In a later product this will be an automated end-point signal transferred to the etching tool.

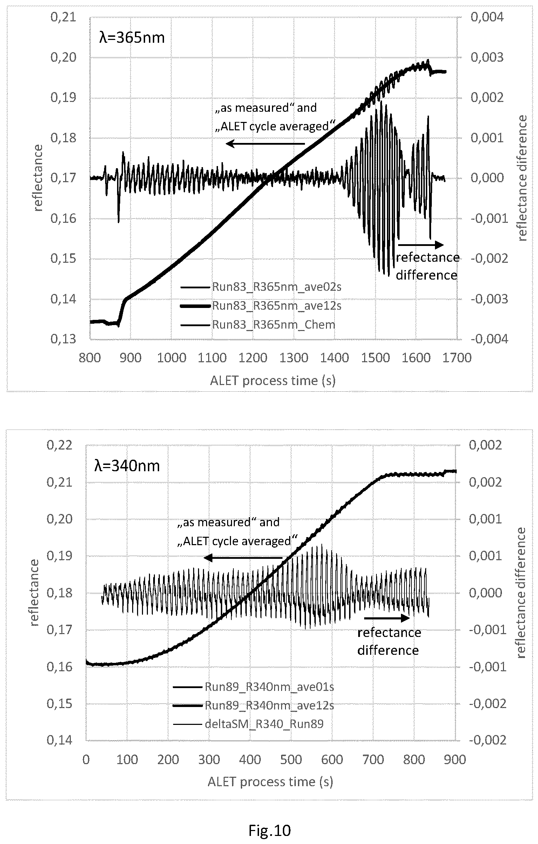

Fig. 10 shows separated ALET modulation of the reflectance traces during AIGaN etching, namely an example: These real-time reflectance difference (dR) traces are created by an algorithm taking the difference between the as-measured in-situ reflectance and the Δt-ALE-smoothened reflectance traces. The dR340nm reflectance difference is dominated by the stepwise removal of material during the self-limiting monolayer-removal (see Fig.6a) subsequence of the ALET cycles. On the other hand, the dR365nm reflectance difference is showing very strong oscillations at the end of the process when at a certain remaining AIGaN thickness the 2DEG is disappearing and in consequence the band gap of the GaN buffer layer is shifting highly reproducible through this 365nm wavelength position. Changes in these dR traces will indicate when the ALET etching process will be drifting away from the reference process, e.g. by changing temperatures at the etching surface or loosing contact to electrostatic clamping.

According to an embodiment, reflectance-difference traces, carrying information on the etching surface and on GaN band-edge contributions to the reflectance, are used for statistical process control (SPC) of the ALET process for keeping it always in the ideal "regime II" (see Fig.6).

According to an embodiment, calibration and correction algorithms are provided for keeping the in-situ measurement within its specified accuracy range even if certain components of the etching chamber and/or the metrology equipment do change.

As explained in the detailed embodiment, the apparatus according to an embodiment utilizes UV LEDs, suitably selected wavelength and high photon-intensities is capable of low-noise measurements of AIGaN thicknesses based on a d(AlGaN)=f(R340nm) look-up table.

However, it is also important to (additionally) deliver absolute thickness precision (repeatability) for many etching runs. Absolute reflectance calibration is performed in a maintenance (reference) run, where the GaN/AlGaN/GaN-buffer structure (identical to the device) is etched through to the GaN buffer for using the reflectance level of the GaN buffer during ALET cycles as reference for absolute reflectance calibration (based on data base nk of GaN). Moreover, the correction of the viewport absorption belongs to this aspect. During a production series of etching runs the viewport to the etching chamber (see Fig.2) may be coated by etching products. This reduces the reflectance intensities. Hence, between the maintenance cycles (where the viewport is cleaned) the intensity drop of viewport transmission is modelled with a simple polynomial function that is used for keeping the thickness precision within the target specification.

According to an embodiment, end-point detection during ALET etching of pGaN layers as used for pGaN HEMT devices is disclosed. In the case of pGaN HEMTs the look-up table (LUT) solution used for end-point detection during AIGaN etching for recess type HEMT structures cannot be applied without certain adoptions. The additional challenge in blind end-point detection during etching through a pGaN layer is that the thickness of the AIGaN barrier layer below the pGaN could be different from run-to-run. Even if this is rather unlikely in high-tech semiconductor manufacturing, the end-point detection during pGaN etching may take this into account, because variations in the AIGaN barrier thickness of only 1nm could change the R340nm reflectance trace during pGaN etch significantly.

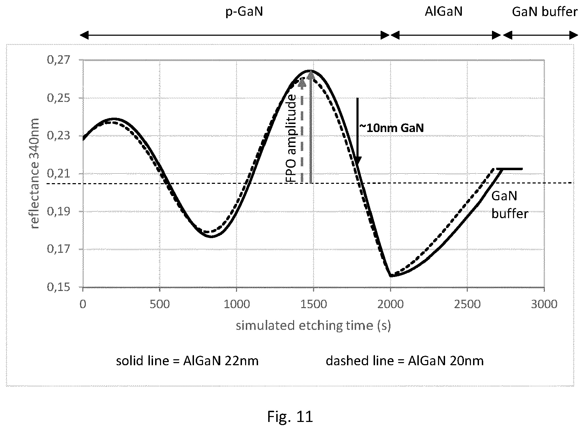

Therefore, the following procedure is proposed (see Fig. 11).

Fig. 11 shows a simulated end-point detection during p-GaN etching: for stopping the ALET etching exactly at ∼10nm the modification of the R340nm reflectance trace by varying AIGaN layer thickness can be correlated with the FPO amplitude. The amplitudes of the Fabry-Perot-Oscillations (FPOs) of R340nm change with the thickness of the AIGaN barrier. The exact amount of this change in FPO amplitudes cannot be precisely predicted because of the complex physics of these devices (as explained in the beginning and already shown in Fig. 5), but it can be calibrated based on ex-situ AIGaN thickness measurements (e.g. by AFM at etching steps).

This procedure results in a two-dimensional look-up table d(pGaN)=f(R340nm, A(FPO)) that gives for the last 20nm of pGaN (where the end-point is to be facilitated) a transformation from R340nm to pGaN thickness that scales with the FPO amplitudes A(FPO) as measured before when the p-GaN is etched from initial ∼100nm down to ∼20nm. As a side product of this procedure a SPC of the AIGaN barrier thickness is added.

### List of reference signs

- 1: GaN cap layer
- 2: AIGaN barrier layer
- 3: Interface layer (e.g. 1 nm AIN)
- 4: GaN buffer layer with integrated AIGaN sub-layers for strain management
- 5: Nucleation layers (AIN, AIGaN)
- 6: Substrate (Si, SiC, Sapphire, ...)
- 7: Trench after etching
- 8: Drain and source contact openings after etching
- 9: Recess after etching
- 10: 2-dimensional electron gas
- 11: gate electrode
- 13: Plasma chamber
- 14: View port
- 15: Stage for lateral movement (X/Y)
- 16: Tilt compensation unit
- 17: Light source and detector
- 18: Electronic control unit
- 19: Communication line
- 20: Control unit
- 21: Wafer

## Claims

1. A method for determining a layer thickness of a sample (2) during processes causing a shrinking or growing of said layer thickness, the method comprising:
a) providing the sample (2) inside a processing chamber (13), wherein the sample (2) comprises a semiconducting wafer (21);
b) irradiating optical radiation onto the sample (2), the optical radiation comprising light of a first wavelength (λ₁) and light of a second wavelength (λ₂);
c) the first wavelength (λ₁) being different from the second wavelength (λ₂);
d) measuring a first reflection signal from the sample (2) with respect to the first wavelength (λ₁);
e) measuring a second reflection signal from the sample (2) with respect to the second wavelength (λ₂);
f) calculating a thickness of the sample (2) based on the first reflection signal and the second reflection signal;
**characterized in that**
g) each of the first wavelength (λ₁) and the second wavelength (λ₂) is selected from a range of 300 nm to 370 nm.

2. The method of claim 1, wherein said determination of said layer thickness is carried out during the sample (2) is etched or deposited in the processing chamber (13) .

3. The method of claim 2, wherein said determination of said layer thickness is carried out during the sample (2) is etched or deposited using a cyclic process keeping the surface atomically smooth on the scale of atomic monolayers.

4. The method of any one of the preceding claims, wherein the sample (2) is etched while steps b) to g) are repeatedly carried out during the etching process.

5. The method of any one of the preceding claims, wherein the first wavelength (λ₁) is selected from a range of 335 nm to 345 nm and the second wavelength (λ₂) is selected from a range of 360 nm to 370 nm.

6. The method of any one of the preceding claims, wherein a look-up table is used for calculating a thickness of the sample (2), the look-up table including correlation data of the thickness of the sample (2) and respective measured reflectance signals at the first wavelength (λ₁).

7. The method of any one of the preceding claims, wherein the sample (2) is a AIGaN layer or wherein the sample (2) is a p GaN layer.

8. The method of the first alternative of claim 7, wherein the sample (2) is a stacked structure of a first semiconductor layer and AIGaN as a second semiconductor layer, wherein the semiconductor material of the first semiconductor layer is different from the material semiconductor material of the second semiconductor layer, and wherein the second semiconductor layer is disposed on top of the first semiconductor layer, wherein the second semiconductor layer is completely etched through so to expose the first semiconductor layer and wherein the absolute thickness of the second semiconductor layer is calculated based on the first reflection signal and the second reflection signal from the exposed first semiconductor layer.

9. The method of the second alternative of claim 7, wherein the sample (2) is a stacked structure of AIGaN as a first semiconductor layer and p GaN as a second semiconductor layer, wherein the semiconductor material of the first semiconductor layer is different from the material semiconductor material of the second semiconductor layer, wherein the second semiconductor layer is completely etched through so to expose the first semiconductor layer and wherein a look-up table is used for calculating a thickness of the sample (2), the look-up table including correlation data between the thickness of the second semiconductor layer and respective measured reflectance signals at the first wavelength (λ₁) and the look-up table further including correlation data between amplitudes of Fabry-Perot-Oscillations of the measured reflectance signals at the first wavelength (λ₁) and the thickness of the first semiconductor layer.

10. An apparatus adapted for determining a layer thickness of a sample (2) during processes causing a shrinking or growing of said layer thickness, wherein said sample (2) comprises a semiconducting wafer (21), the apparatus comprising:
a processing chamber (13) adapted to accommodate the sample (2);
a light source unit (17) adapted for irradiating optical radiation onto the sample (2), the optical radiation comprising light of a first wavelength (λ1) and light of a second wavelength (λ2); wherein the first wavelength (λ1) is different from the second wavelength (λ2);
a detection unit (17) adapted for measuring a first reflection signal from the sample (2) with respect to the first wavelength (λ1) and adapted for measuring a second reflection signal from the sample (2) with respect to the second wavelength (λ2);
an electronic control unit (18) adapted for calculating a thickness of the sample (2) based on the first reflection signal and the second reflection signal.
